# EUROPÄISCHE PATENTSCHRIFT

(11) **EP 2 159 656 B1**
(45) Veröffentlichungstag und Bekanntmachung des Hinweises auf die Patenterteilung: **28.11.2012**
(21) Anmeldenummer: 08015247.3
(22) Anmeldetag: 29.08.2008
(51) Int. Cl.: G05B 19/418, G06F 21/00, H04L 29/06, H04L 29/08

(54) **Verfahren zur gesicherten Übermittlung von Daten in einem mehrere Netzknoten umfassenden Automatisierungssystem, Computerprogram und Automatisierungssystem**
Method for secure data transmission in an automation system encompassing several network nodes, computer program and automation system
Procédé de transmission sécurisée de données dans un système d'automatisation comprenant plusieurs noeuds en réseau, programme informatique et système d'automatisation

(43) Veröffentlichungstag der Anmeldung: 03.03.2010
(73) Patentinhaber: Siemens Aktiengesellschaft, 80333 München (DE)
(72) Erfinder: Herberth, Harald, 90522 Oberasbach (DE); Kröger, Ulrich, 67657 Kaiserslautern (DE); Sobihard, Allan, 84104 Bratislava (SK)

(56) Entgegenhaltungen:
- EP-A- 1 582 950
- US-A1- 2004 092 310
- US-A1- 2004 107 025

## Beschreibung

Aufgrund einer ständig steigenden Bedeutung von Informationstechnik für Automatisierungssysteme gewinnen Verfahren zur Sicherung von vernetzten Systemkomponenten wie Überwachungs-, Steuerungs- und Regelungseinrichtungen, Sensoren und Aktoren gegenüber unberechtigtem Zugriff verstärkt an Bedeutung. Im Vergleich zu anderen Anwendungsgebieten der Informationstechnik kommt Datenintegrität in der Automatisierungstechnik eine besonders hohe Bedeutung zu. Insbesondere bei einer Erfassung, Auswertung und Übermittlung von Meß- und Steuerungsdaten ist sicherzustellen, daß vollständige und unveränderte Daten vorliegen. Absichtliche, unabsichtliche oder durch einen technischen Fehler bedingte Veränderungen sind zu vermeiden. Besondere Anforderungen in der Automatisierungstechnik für sicherheitstechnische Verfahren resultieren außerdem aus einem Meldungsverkehr mit verhältnismäßig vielen, aber relativ kurzen Nachrichten. Daneben ist einer Echtzeitfähigkeit eines Automatisierungssystems und seiner Systemkomponenten Rechnung zu tragen.

Für große, verteilte Automatisierungssysteme werden vielfach zumindest partiell Kommunikationsnetze verwendet, die nicht unter vollständiger Kontrolle eines Betreibers eines Automatisierungssystems stehen oder gar ungesichert betrieben werden. Um oben genannten Sicherheitsanforderungen dennoch Rechnung zu tragen, müssen Administration von Kommunikationsnetzen sowie Steuerung und Überwachung von Automatisierungssystemen koordiniert werden, was häufig aufwendig und ineffizient ist. Außerdem kann es unter Sicherheitsaspekten auch für einen Betreiber eines Kommunikationsnetzes unerwünscht sein, einem Betreiber eines das Kommunikationsnetz nutzenden Automatisierungssystems administrativen Zugriff auf Netzwerkinfrastruktur wie Firewalls oder Security Gateways einzuräumen. Alternative Ansätze zur Sicherung von Netzwerkverbindungen wie SSH oder SSL/TLS stehen üblicherweise unter Kontrolle einzelner Programmanwendungen, was eine systemweite Anwendung derartiger Konzepte erschwert. Zudem werden SSH und SSL/TLS bisher in Anwendungsfällen genutzt, in denen sich lediglich ein Server gegenüber einem Client authentisiert und für eine Authentisierung des Clients gegenüber dem Server zur Aufwandsbegrenzung auf andere Ansätze wie Kennungs- und Paßwortabfrage zurückgegriffen wird. Für eine Anwendung in einem Automatisierungssystem sind solche Ansätze aufgrund obiger Sicherheits- und Echtzeitanforderungen eher ungeeignet.

Ein gesichertes Automatisierungssystem ist aus EP-A-1 582 950 bekannt.

Der vorliegenden Erfindung liegt daher die Aufgabe zugrunde, ein effektives, einfach zu implementierendes Verfahren zur gesicherten Übermittlung von Daten in einem Automatisierungssystem zu schaffen, sowie eine geeignete technische Realisierung des Verfahrens anzugeben.

Diese Aufgabe wird erfindungsgemäß durch ein Verfahren mit den in Anspruch 1 angegebenen Merkmalen, durch ein Computerprogramm mit den in Anspruch 9 angegebenen Merkmalen sowie durch ein Automatisierungssystem mit den in Anspruch 10 angegebenen Merkmalen gelöst. Vorteilhafte Weiterbildungen der vorliegenden Erfindung sind in den abhängigen Ansprüchen angegeben.

Erfindungsgemäß werden zur gesicherten Übermittlung von Daten in einem mehrere Netzknoten umfassenden Automatisierungssystem Netzknoten erfaßt, die über ein ungesichertes Netzwerk miteinander verbunden sind. Netzknoten, die bereits über ein beispielsweise durch einen Netzwerkadministratoreingriff gesichertes Netzwerk verbunden sind, brauchen hierbei nicht berücksichtigt zu werden. Anhand der erfaßten Netzknoten wird eine Auswahl von Netzknoten ermittelt, deren Kommunikation auf einer Netzwerkprotokollebene oberhalb einer Transportschicht zu sichern ist. Auf diese Weise kann auf eine Sicherung des ungesicherten Netzwerks durch einen Netzwerkadministratoreingriff verzichtet werden, was insbesondere bei einer partiellen Nutzung von Fremdnetzen ohne Administrationsrechte Vorteile bietet.

Anhand der Auswahl werden netzknotenindividuelle digitale Signaturschlüssel an von der Auswahl umfaßte Netzknoten übermittelt. Dies kann beispielsweise automatisch erfolgen. Eine Kommunikation zwischen von der Auswahl umfaßten Netzknoten wird anhand der übermittelten Signaturschlüssel gegen eine Verfälschung gesichert. Mit der vorliegenden Erfindung kann eine Sicherung eines genutzten Netzwerks einfach konfigurierbar und für Anwendungen innerhalb des Automatisierungssystems transparent gestaltet werden. Zudem kann eine Konfiguration von Sicherheitseinstellungen vollständig unter Kontrolle eines Betreibers des Automatisierungssystems gestellt werden, ohne daß dies Zielsetzungskonflikte mit einer Administration für das Automatisierungssystem genutzter Netzwerke hervorruft.

Werden netzknotenindividuelle digitale Signaturschlüssel durch eine vertrauenswürdige Instanz innerhalb des Automatisierungssystems nur an von der Auswahl umfaßte Netzknoten übermittelt, ergibt sich ein reduzierter Aufwand zur Absicherung des Netzwerks. Vorzugsweise wird hierzu ausschließlich eine Kommunikation zwischen von der Auswahl umfaßten Netzknoten anhand der übermittelten Signaturschlüssel gesichert, beispielsweise gegen eine Verfälschung.

Entsprechend einer bevorzugten Ausgestaltung der vorliegenden Erfindung wird die Auswahl von Netzknoten durch ein Engineering-System zur Konfiguration, Wartung, Inbetriebnahme und/oder Dokumentation des Automatisierungssystems ermittelt. Die netzknotenindividuellen digitalen Signaturschlüssel werden ebenfalls durch das Engineering-System an die von der Auswahl umfaßte Netzknoten übermittelt. Auf diese Weise lassen Funktionen des Automatisierungssystems und Sicherheitsmechanismen zur Vermeidung von Fehlern oder Systemkonflikten durch eine Instanz gebündelt überwachen und steuern.

Durch die Kommunikation zwischen den von der Auswahl umfaßten Netzknoten können Dienste des Automatisierungssystems innerhalb einer dienstorientierten Architektur bereitgestellt werden. Dienstorientierte bzw. serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Dies erleichtert gerade in verteilten Automatisierungssystemen eine Bereitstellung von Komponentenfunktionen.

Die Erfindung wird nachfolgend an einem Ausführungsbeispiel anhand der Zeichnung näher erläutert. Es zeigt
- Figur 1: ein Ablaufdiagramm für ein Verfahren zur gesicherten Übermittlung von Daten in einem mehrere Netzknoten umfassenden Automatisierungssystem
- Figur 2: eine schematische Darstellung eines Automatisierungssystems zur Realisierung des Verfahrens gemäß Figur 1.

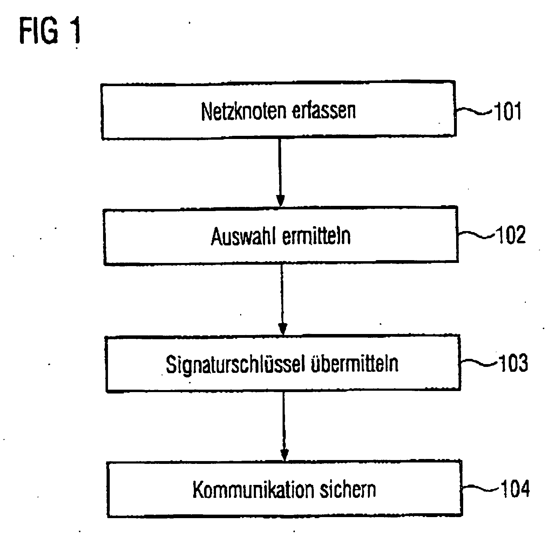

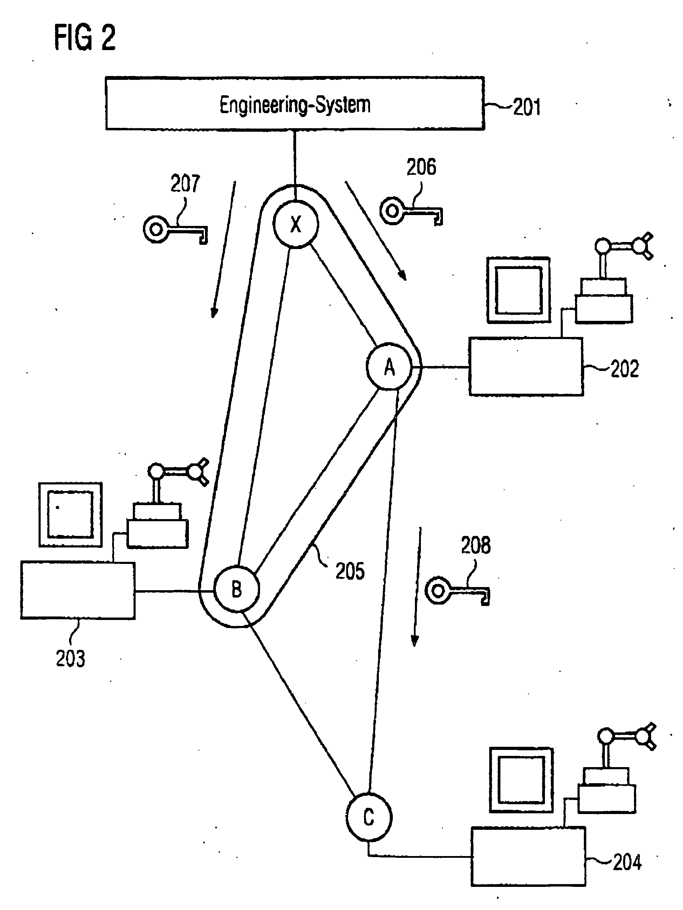

Bei dem in Figur 1 veranschaulichten Verfahren erfaßt ein Engineering-System 201 zur Konfiguration, Wartung, Inbetriebnahme und/oder Dokumentation des in Figur 2 dargestellten Automatisierungssystems entsprechend Schritt 101 Netzknoten erfaßt, die nicht über ein gesichertes Netzwerk miteinander verbunden sind. Im vorliegenden Ausführungsbeispiel sind Netzknoten X, A, B über ein gesichertes Netzwerk 205 mit einander verbunden, während Netzknoten C außerhalb des gesicherten Netzwerks 205 liegt. Neben dem Engineering-System 201 an Netzknoten X umfaßt das Automatisierungssystem an den Netzknoten A, B, C Rechnereinheiten 202-204, auf denen jeweils Steuerungsprogramme installiert sind, durch die Dienste des Automatisierungssystems innerhalb einer dienstorientierten Architektur bereitgestellt werden.

Die Steuerungsprogramme dienen im vorliegenden Ausführungsbeispiel zur Ansteuerung von meßtechnischer oder aktorischer Peripherie der Rechnereinheiten 202-204, wie Sensoren oder Roboter. Im Hinblick auf einen Meldungsaustausch zur Steuerung und Überwachung der Rechnereinheiten 202-204 ist sicherzustellen, daß Meldungen auf einem Weg von einem Sender zu einem Empfänger nicht verfälscht werden, Andernfalls könnte dies zu Störungen oder Schäden im Automatisierungssystem führen. Außerdem kann ein Interesse darin bestehen, daß beispielsweise ein infolge eines Ablaufs eines Steuerungsprogramms erfaßtes Meßergebnis nur durch einen berechtigten Benutzer abfragbar ist und eine übermittelte Meldung mit dem Meßergebnis nicht durch unautorisierte Benutzer abgefangen und ausgelesen werden kann. Ein Benutzer kann hierbei auch ein anderes Gerät innerhalb des Automatisierungssystems sein.

Da die Netzknoten X, A, B innerhalb gesicherten Netzwerks liegen, werden gemäß Schritt 101 lediglich die Netzknotenpaare X-C, A-C, B-C als über ungesichertes Netzwerk verbunden erfaßt. Falls durch das Engineering-System 201 durch Benutzerkonfiguration vorgegeben wird, daß eine Kommunikation von und zum Netzknoten C gesichert werden soll, wird entsprechend Schritt 102 anhand der in Schritt 101 erfaßten Netzknoten eine Auswahl von Netzknoten ermittelt, deren Kommunikation auf einer Netzwerkprotokollebene oberhalb einer Transportschicht auf nachfolgend beschriebene Weise zu sichern ist. Das Engineering-System 201 erstellt gemäß Schritt 103 anhand der Auswahl automatisch netzknotenindividuelle digitale Signaturschlüssel 206-208 und übermittelt diese genau an die von der Auswahl umfaßten Netzknoten. Das Engineering-System 201 fungiert hierbei als vertrauenswürdige Instanz innerhalb des Automatisierungssystems. Anhand der übermittelten Signaturschlüssel kann damit eine Kommunikation zwischen den von der Auswahl umfaßten Netzknoten gemäß Schritt 104 gegen eine Verfälschung gesichert werden. Diese Maßnahme sollte im Sinne einer raschen und effizienten Verteilung der Signaturschlüssel nicht unnötig auf von der Auswahl nicht umfaßte Netzknotenpaare ausgedehnt werden.

Das beschriebene Verfahren wird durch ein Computerprogramm implementiert, das in einen Arbeitsspeicher des Engineering-Systems 201 ladbar und zumindest eine Codeabschnitt aufweist, bei dessen Ausführung die vorangehend beschriebenen Schritte ausgeführt bzw. veranlaßt werden, wenn das Computerprogramm im Engineering-System 201 abläuft.

Zur Sicherung der Kommunikation zwischen den Netzknotenpaaren X-C, A-C, B-C werden von einem sendenden Netzknoten an einen empfangenden Netzknoten übermittelte Daten mittels eines dem sendenden Netzknoten zugeordneten Signaturschlüssels digital signiert. Auf Seiten des empfangenden Netzknotens werden empfangene digital signierte Daten mittels eines dem sendenden Netzknoten zugeordneten digitalen Zertifikats verifiziert. Zur Sicherung der Kommunikation wird dabei als Netzwerkprotokoll Secure Socket Layer (SSL) bzw. Transport Layer Security (TLS) verwendet.

SSL ist ein hybrides Verschlüsselungsprotokoll zur Datenübertragung im Internet. Im OSI-Kommunikationsmodell ist SSL zwischen Transportschicht und Anwendungsschicht angesiedelt. Das SSL-Protokoll umfaßt wiederum auf einer oberen Schicht SSL Handshake Protocol, SSL Change Cipherspecification Protocol, SSL Alert Protocol sowie SSL Application Data Protocol und auf einer unteren Schicht SSL Record Protocol.

Das SSL Record Protocol dient zur Absicherung einer Verbindung. Es setzt direkt auf der Transportschicht auf und implementiert folgende Dienste:
- Ende-zu-Ende-Verschlüsselung mittels symmetrischer Algorithmen; ein dabei verwendeter Schlüssel wird im Voraus über ein weiteres Protokoll (z.B. SSL Handshake Protocol) vereinbart und wird nur einmal für eine Verbindung verwendet,
- Sicherung von Nachrichten-Integrität und Authentizität durch Bildung einer kryptografischen Prüfsumme.

Das SSL Handshake Protocol für ein Vereinbaren eines bei der Ende-zu-Ende-Verschlüsselung verwendeten Schlüssels greift auf das SSL Record Protocol und stellt folgende Funktionen bereit:
- Identifikation und Authentifizierung von Kommunikationspartnern auf Basis asymmetrischer Verschlüsselungsverfahren und Public-Key-Kryptografie,
- Aushandeln zu benutzender kryptografischer Algorithmen und Schlüssel.

Das Vereinbaren des bei der Ende-zu-Ende-Verbindung verwendeten Schlüssels gliedert sich in vier Phasen. In einer ersten Phase sendet ein Client eine "client_hello"-Meldung an einen Server. Der Server beantwortet diese Meldung durch eine "server_hello"-Meldung an den Client. In einer zweiten, optionalen Phase identifiziert sich der Server gegenüber dem Client. In einer dritten, ebenfalls optionalen Phase identifiziert sich der Client gegenüber dem Server. Besitzt der Client kein Zertifikat, so wird eine "NoCertificateAlert"-Meldung an den Server übermittelt. Außerdem verifiziert der Client ein vom Server empfangenes Zertifikat und berechnet einen "pre-master-secret"-Wert. Bei fehlgeschlagener Verifizierung die Verbindung zwischen Client und Server abgebrochen. Das Zertifikat des Servers umfaßt einen öffentlichen Schlüssel des Servers. In einer vierten Phase wird das Vereinbaren des bei der Ende-zu-Ende-Verbindung verwendeten Schlüssels abgeschlossen. Aus dem "pre-master-secret"-Wert wird ein "Master Secret"-Wert abgeleitet und aus diesem ein einmaliger Session Key. Das ist ein einmalig benutzbarer symmetrischer Schlüssel, der während einer Verbindung zum Ver- und Entschlüsseln von Daten genutzt wird. Zwischen Kommunikationspartnern gegenseitig ausgetauschte Daten werden von nun an nur noch verschlüsselt übertragen.

Da Automatisierungsgeräte, insbesondere Feldgeräte, in einem Automatisierungssystem üblicherweise keine öffentliche Netzwerkadresse und keinen DNS-Namen aufweisen, Zertifikate aber normalerweise Angaben über einen DNS-Namen umfassen werden vorzugsweise selbst signierte Zertifikate (self signed certificates) verwendet. Zertifikatsfelder mit Angaben über Aussteller (issuer) und Träger (subject) des Zertifikats können dabei mit gleichen Werten belegt werden, die beispielsweise von jeder Anwendung innerhalb des Automatisierungssystems vorgegeben werden können.

Die Anwendung der vorliegenden Erfindung ist nicht auf das beschriebene Ausführungsbeispiel beschränkt.

## Patentansprüche

1. Verfahren zur gesicherten Übermittlung von Daten in einem mehrere Netzknoten umfassanden Automatisierungssystem, bei dem
- Netzknoten erfaßt werden (101), die über ein ungesichertes Netzwerk miteinander verbunden sind,
- anhand der erfaßten Netzknoten eine Auswahl von Netzknoten ermittelt wird (102), deren Kommunikation auf einer Netzwerkprotokollebene oberhalb einer Transportschicht zu sichern ist,
- anhand der Auswahl netzknotenindividuelle digitale Signaturschlüssel an von der Auswahl umfaßte Netzknoten übermittelt werden (103) und
- ausschließlich eine Kommunikation zwischen von der Auswahl umfaβten Netzknoten anhand der übermittelten Signaturschlüssel gegen, eine Verfälschung gesichert wird (104).

2. Verfahren nach Anspruch 1,
bei dem von einem von der Auswahl umfaßten sendenden Netzknoten an einen von der Auswahl umfaßten empfangenden Netzknoten übermittelte Daten mittels eines dem sendenden Netzknoten zugeordneten Signaturschlüasels digital signiert werden.

3. Verfahren nach Anspruch 2,
bei dem empfangene digital signierte Daten mittels eines dem sendenden Netzknoten zugeordneten digitalen Zertifikats verifiziert werden.

4. Verfahren nach Anspruch 3,
bei dem als Netzwerkprotokoll zur sicherung der Kommunikation zwischen von der Auswahl umfaßten Netzknoten Secure Socket Layer oder Transport Layer Security verwendet wird.

5. Verfahren nach einem der Ansprüche 1 bis 4,
bei dem anhand der Auswahl netzknotenindividuelle digitale Signaturachlüssel durch eine vertrauenswürdige Instanz innerhalb des Automatisierungssystems nur an von der Auswahl umfaßte Netzknoten übermittelt werden.

6. Verfahren nach einem der Ansprüche 1 bis 5,
bei dem die Auswahl von Netzknoten durch ein Engineering - System zur Konfiguration, Wartung, Inbetriebnahme und/oder Dokumentation des Automatisierungssystems ermittelt wird, und bei dem die netzknotenindividuellen digitalen Signaturschlüssel durch das Engineering-System erzeugt und an die von der Auswahl umfaßte Netzknoten übermittelt werden.

7. Verfahren nach einem der Ansprüche 1 bis 6,
bei dem durch die Kommunikation zwischen den von der Auswahl umfaßten Netzknoten Dienste des Automatisierungssystems innerhalb einer dienstorientierten Architektur bereitgestellt werde.

8. Verfahren nach einem der Ansprüche 1 bis 7,
bei dem selbst signierte Zertifikate verwendet und Zertifikatsfelder mit Angaben über Aussteller und Träger des Zertifikats mit gleichen Werten belegt werden, die von Anwendungen innerhalb des Automatisierungssyetems vorgegeben werden.

9. Computerprogramm zur gesicherten Übermittlung von Daten,
das in einen Arbeitsspeicher eines Rechners ladbar ist und zumindest einen Codeabschnitt aufweist, bei dessen Ausführung
- Netzknoten erfaßt werden (101), die über ein ungesichertes Netzwerk miteinander verbunden sind,
- anhand der erfaßten Netzknoten eine Auswahl von Netzknoten ermittelt wird (102) deren Kommunikation auf einer Netzwerkprotokollebene oberhalb einer Tranaportschicht zu sichern ist,
- anhand der Auswahl netzknotenindividuelle digitale Signatursehlüssel an von der Auswahl umfaßte Netzknoten übermittelt werden (103) und
- ausschließlich eine Kommunikation zwischen von der Auswahl umfaßten Netzknoten anhand der übermittelten Signaturschlüssel gegen eine Verfälschung gesichert wird (104), wenn das Computerprogramm im Rechner abläuft.

10. Automatisierungssystem mit
- mehreren über ein Kommunikationsnetz miteinander verbundenen Pechnereinheiten (202-204) an Netzknoten des Automatisierungssystems,
- einer ersten Rechnereinheit (201) zur Erfassung von Netzknoten, die über ein ungesichertes Netzwerk miteinander verbunden sind, und zur darauf basierenden Ermittlung einer Auswahl von Netzknoten, deren Kommunikation auf einer Netzwerkprotokollebene oberhalb einer Transportschicht zu sichern ist,
- einer Übermittlungseinrichtung (201) zur Übermittlung netzknotenindividueller digitale Signaturschlüssel ausschließlich an von der Auswahl umfaßte Netzknoten und
- einer zweiten (202) und einer dritten (204) Rechnereinheit an von der Auswahl umfaßten Netzknoten, zwischen denen ausschlieβlich eine anhand der übermittelten Signaturschlüssel gesicherte Kommunikationsverbindung besteht.

## Claims

1. Method for secure data transmission in an automation system encompassing several network nodes, in which
- network nodes are detected (101) which are connected to one another via a non-secure network,
- by means of the detected network nodes, a selection of network nodes is determined (102), the communication of which must be secured on a network protocol level above a transport layer,
- by means of the selection, network-node-individual digital signature keys are transmitted to network nodes encompassed by the selection (103) and
- exclusively one communication between network nodes encompassed by the selection is secured against corruption by means of the signature keys transmitted (104).

2. Method according to Claim 1, in which data transmitted from a transmitting network node encompassed by the selection to a receiving network node encompassed by the selection are digitally signed by means of a signature key allocated to the transmitting network node.

3. Method according to Claim 2, in which received digitally signed data are verified by means of a digital certificate allocated to the transmitting network node.

4. Method according to Claim 3, in which secure socket layer or transport layer security is used as network protocol for securing the communication between network nodes encompassed by the selection.

5. Method according to one of Claims 1 to 4, in which, by means of selection, network node-individual digital signature keys are transmitted only to network nodes encompassed by the selection by a trustworthy entity within the automation system.

6. Method according to one of Claims 1 to 5, in which the selection of network nodes is determined by an engineering system for configuration, maintenance, commissioning and/or documentation of the automation system and in which the network-node-individual digital signature keys are generated by the engineering system and transmitted to the network nodes encompassed by the selection.

7. Method according to one of Claims 1 to 6, in which services of the automation system are provided within a service-oriented architecture by means of the communication between the network nodes encompassed by the selection.

8. Method according to one of Claims 1 to 7, in which self-signed certificates are used and certificate fields are occupied with information about issuer and subject of the certificate with equal values which are predetermined by applications within the automation system.

9. Computer program for secure transmission of data which can be loaded into a main memory of a computer and has at least one code section during the execution of which
- network nodes are detected (101) which are connected to one another via a non-secure network,
- a selection of network nodes is determined by means of the network nodes detected (102), the communication of which must be secured on a network protocol level above a transport layer,
- by means of the selection, network-node-individual digital signature keys are transmitted to network nodes encompassed by the selection (103) and
- exclusively one communication between network nodes encompassed by the selection is secured against corruption by means of the transmitted signature keys (104),
when the computer program is running in the computer.

10. Automation system comprising
- several computer units (202-204) connected to one another via a communication network, at network nodes of the automation system,
- a first computer unit (201) for detecting network nodes which are connected to one another via a non-secure network and for the determination, based thereon, of a selection of network nodes, the communication of which is to be secured on a network protocol level above a transport layer,
- a transmitting device (201) for transmitting network-node-individual digital signature keys exclusively to network nodes encompassed by the selection, and
- a second (202) and a third (204) computer unit at network nodes encompassed by the selection, between which a communication connection secured by means of the transmitted signature keys exists exclusively.

## Revendications

1. Procédé de transmission sécurisée de données dans un système d'automatisation comprenant plusieurs noeuds de réseau, dans lequel
- on détecte ( 101 ) des noeuds de réseau, qui sont reliés entre eux par un réseau non sécurisé,
- au moyen des noeuds de réseau détectés, on détermine ( 102 ) un choix de noeuds de réseau, dont il faut sécuriser la communication sur un plan de protocole de réseau au-dessus d'une couche de transport,
- au moyen du choix, on transmet ( 103 ) des clés de signature numérique individuelles aux noeuds de réseau aux noeuds de réseau englobés dans le choix et
- on sécurise ( 104 ) à l'encontre d'une fraude, au moyen des clés de signature transmises, une communication entre les noeuds de réseau englobés dans le choix.

2. Procédé suivant la revendication 1,
dans lequel on signe numériquement au moyen d'un clé de signature associée au noeud de réseau émetteur, des données transmises par un noeud de réseau émetteur englobé dans le choix à un noeud de réseau récepteur englobé dans le choix.

3. Procédé suivant la revendication 2,
dans lequel on vérifie les données reçues signées numériquement, au moyen d'un certificat numérique associé au noeud de réseau émetteur.

4. Procédé suivant la revendication 3,
dans lequel on utilise, comme protocole de réseau pour la sécurisation de la communication entre des noeuds de réseau englobés dans le choix, Secure Socket Layer ou Transport Layer Security.

5. Procédé suivant l'une des revendications 1 à 4,
dans lequel on transmet seulement à des noeuds de réseau englobés dans le choix, au moyen du choix des clés de signature numérique individuelles aux noeuds de réseau, par une instance digne de confiance au sein du système d'automatisation.

6. Procédé suivant l'une des revendications 1 à 5,
dans lequel on détermine le choix de noeuds de réseau par un système d'ingénierie pour la configuration, l'entretien, la mise en fonctionnement et/ou la documentation du système d'automatisation, et dans lequel on produit les clés de signature numérique individuelles aux noeuds de réseau par le système d'ingénierie et on les transmet au noeud de réseau englobé dans le choix.

7. Procédé suivant l'une des revendications 1 à 6,
dans lequel on met à disposition au sein d'une architecture à orientation service, des services du système d'automatisation par la communication entre les noeuds de réseau englobés dans le choix.

8. Procédé suivant l'une des revendications 1 à 7,
dans lequel on utilise des certificats à auto-signature et on établit des champs de certificat ayant des indications sur l'émetteur et le porteur du certificat par les valeurs mêmes qui sont prescrites par des utilisations au sein du système d'automatisation.

9. Programme informatique pour la transmission sécurisée de données, qui peut être exploité dans une mémoire de travail d'un ordinateur et qui a au moins une partie de code, dans l'exécution de laquelle
- on détecte ( 101 ) des noeuds de réseau, qui sont reliés entre eux par un réseau non sécurisé,
- au moyen des noeuds de réseau détectés, on détermine ( 102 ) un choix de noeuds de réseau, dont il faut sécuriser la communication sur un plan de protocole de réseau au-dessus d'une couche de transport,
- au moyen du choix, on transmet ( 103 ) des clés de signature numérique individuelles aux noeuds de réseau aux noeuds de réseau englobés dans le choix et
- on sécurise ( 104 ) à l'encontre d'une fraude, au moyen des clés de signature transmises, une communication entre les noeuds de réseau englobés dans le choix,
lorsque le programme informatique se déroule dans l'ordinateur.

10. Système d'automatisation comprenant
- plusieurs unités ( 202 à 204 ) d'ordinateur, reliées entre elles par un réseau de communication, sur des noeuds de réseau du système d'automatisation,
- une première unité ( 201 ) d'ordinateur pour la détection de noeuds de réseau qui sont reliés entre eux par un réseau non sécurisé et pour la détermination sur cette base d'un choix de noeuds de réseau, dont il faut sécuriser la communication sur un plan de protocole de réseau au-dessus d'une couche de transport,
- un dispositif ( 201 ) de transmission pour la transmission de clés de signature numérique individuelles aux noeuds de réseau, exclusivement à des noeuds de réseau englobés dans le choix et
- une deuxième ( 202 ) et une troisième ( 204 ) unités d'ordinateur sur des noeuds de réseau englobés dans le choix, entre lesquels il y a exclusivement une liaison de communication sécurisée au moyen des clés de signature transmises.
